# EUROPEAN PATENT SPECIFICATION

(11) **EP 2 951 514 B1**
(45) Date of publication and mention of the grant of the patent: **21.11.2018**
(21) Application number: 14746691.6
(22) Date of filing: 28.01.2014
(51) Int. Cl.: F25D 3/00, F25D 31/00

(54) **CARBON DIOXIDE CHARGING APPARATUS AND METHOD FOR HEAT EXCHANGE UNIT**
KOHLENDIOXIDLADEVORRICHTUNG UND VERFAHREN FÜR WÄRMETAUSCHEREINHEIT
PROCÉDÉ ET APPAREIL DE CHARGE DU DIOXYDE DE CARBONE POUR UNITÉ D'ÉCHANGE DE CHALEUR

(30) Priority: 29.01.2013 US 201361757992 P
(43) Date of publication of application: 09.12.2015
(73) Proprietor: Joseph Company International, Inc., Irvine, CA 92614 (US)
(72) Inventor: SILLINCE, Mark, Rustington West Sussex BN16 38J (GB)
(74) Representative: Padial Martinez, Ana Belen
(86) International application number: PCT/US2014/013436
(87) International publication number: WO 2014/120680

(56) References cited:
- WO-A1-00/47346
- US-A- 4 775 396
- US-A- 4 775 396
- US-A- 5 020 303
- US-A1- 2001 005 931

## Description

### FIELD OF THE INVENTION

The present invention relates generally to a heat exchange unit for use in containers for self-chilling foods or beverages and more particularly to the adsorption of carbon dioxide on compacted activated carbon for use in a heat exchange unit of the type in which temperature reduction is caused by the desorption of the carbon dioxide from the compacted activated carbon disposed within the heat exchange unit.

### DESCRIPTION OF THE ART

Many foods or beverages available in portable containers are preferably consumed when they are chilled. For example, carbonated soft drinks, fruit drinks, beer, puddings, cottage cheese and the like are preferably consumed at temperatures varying between 33° Fahrenheit (0.555° Celsius) and 50° Fahrenheit (10° Celsius). When the convenience of refrigerators or ice is not available such as when fishing, camping or the like, the task of cooling these foods or beverages prior to consumption is made more difficult and in such circumstances it is highly desirable to have a method for rapidly cooling the content of the containers prior to consumption. Thus a self-cooling container, that is, one not requiring external low temperature conditions is desirable.

The art is replete with container designs which incorporate a coolant capable of cooling the contents without exposure to the external low temperature conditions. The vast majority of these containers incorporate or otherwise utilize refrigerant gases which upon release or activation absorb heat in order to cool the contents of the container. Other techniques have recognized the use of endothermic chemical reactions as a mechanism to absorb heat and thereby cool the contents of the container. Examples of such endothermic chemical reaction devices are those disclosed in U.S. Pat. Nos. 1,897,723, 2,746,265, 2,882,691 and 4,802,343.

Typical of devices which utilize gaseous refrigerants are those disclosed in U.S. Pat. Nos. 2,460,765, 3,373,581, 3,636,726, 3,726,106, 4,584,848, 4,656,838, 4,784,678, 5,214,933, 5,285,812, 5,325,680, 5,331,817, 5,606,866, 5,692,381 and 5,692,391. In many instances the refrigerant gas utilized in a structure such as those shown in the foregoing U.S. Patents do not function to lower the temperature properly or if they do, they contain a refrigerant gaseous material which may contribute to the greenhouse effect and thus is not friendly to the environment.

To solve problems such as those set forth in the prior art, applicant is utilizing as a part of the present invention an adsorbent-desorbent system which comprises activated carbon which functions as an adsorbent for carbon dioxide. A system of this type is disclosed in U.S. Pat. No. 5,692,381 which is incorporated herein by reference.

In these devices the adsorbent material is disposed within a vessel, the outer surface of which is in contact thermally with the food or beverage to be cooled. Typically, the vessel is connected to an outer container which receives the food or beverage to be cooled in such a manner that it is in thermal contact with the outer surface of the vessel containing the adsorbent material. This vessel or heat exchange unit is affixed to the outer container, typically to the bottom thereof, and contains a valve or similar mechanism which functions to release a quantity of gas, such as carbon dioxide which has been adsorbed by the adsorbent material contained within the inner vessel. When the valve is opened the gas, such as carbon dioxide, is desorbed and the endothermic process of desorption of the gas from the activated carbon adsorbent causes a reduction in the temperature of the food or beverage which is in thermal contact with the outer surface of the inner vessel thereby lowering the temperature of the food or beverage contained therein.

To accomplish this cooling it is imperative that as much carbon dioxide as possible be adsorbed onto the carbon particles contained within the inner vessel and further that the thermal energy contained within the food or beverage be transferred therefrom through the wall of the inner vessel and through the adsorbent material to be carried out of the heat exchange unit along with the desorbed carbon dioxide gas. Preferably, the adsorbent material is activated carbon and the gas to be adsorbed is carbon dioxide. In the context of this disclosure, "activated carbon" relates to a family of carbonaceous materials specifically activated to develop strong adsorptive properties whereby even trace quantities of liquids or gases may be adsorbed onto the carbon. Such activated carbon may be produced from a wide range of sources, for example coal, wood, nuts (such as coconut) and bones and may be derived from synthetic sources, such as polyacrylonitrile. Various methods of activation exist, such as selective oxidation with steam, carbon dioxide or other gases at elevated temperatures or chemical activation using, for example, zinc chloride or phosphoric acid. The adsorbent also includes a graphite material in an amount 0.01 to 80% by weight of the total composition, and a binder material.

Any available form of graphite, natural or synthetic, may be incorporated into the activated carbon, for example powdered or flakes of graphite may be used. Preferably, graphite is included in an amount ranging from 10% to 50% by weight, more prefereably 20% to 45% by weight, especially 40% by weight.

A binder material is included such as polytetrafluoroethylene, to achieve green strength of the formulation for further handling. A composition of activated carbon with graphite and a binder is disclosed in U.S. Patent 7,185,511 which is incorporated herein by reference. US Patent 4775396 discloses a zeolite compound for adsorbing carbon dioxide gas.

When the carbon dioxide under pressure is inserted into the heat exchange unit to be adsorbed onto the compacted adsorbent material, a physical exothermic reaction occurs thereby releasing heat. As a result of this exothermic reaction the compacted adsorbent material also heats up and in so doing limits the amount of carbon dioxide which can be adsorbed onto the adsorbent material. To mitigate this problem, it has in the past been necessary to charge the heat exchange unit (HEU) with the pressurized carbon dioxide in stages, that is, the carbon dioxide under pressure is inserted into the HEU until the compacted adsorbent material is no longer capable of adsorbing the carbon dioxide. At this point the source of carbon dioxide under pressure is removed and the HEU is allowed to cool or alternatively is placed in a cooling tunnel which is maintained at a very low temperature to dissipate the heat which has been generated. Such a system is disclosed in WO 00/47346. Obviously this creates a situation where mass production of the HEU is interfered with thus increasing the cost of production. There is thus a need for an apparatus and a method to charge the assembled HEU with the carbon dioxide under pressure in such a manner that the heat generated by the exothermic reaction is removed during the time that the carbon dioxide is being adsorbed onto the compacted adsorbent material in the HEU.

### SUMMARY OF THE INVENTION

The present invention is disclosed in the independent claims 1 and 6.

### BRIEF DESCRIPTION OF THE DRAWINGS

Figure 1 is a block diagram showing the method of the present invention;
Figure 2 is a block diagram illustrating a specific portion of the method as shown in Figure 1;
Figure 3 is a schematic diagram showing an assembled container and HEU;
Figure 4 is a cross-sectional view of a puck for use in the method of the present invention; and
Figure 5 is a schematic diagram of an apparatus for carbon dioxide charging of a heat exchange unit while simultaneously removing the heat generated.

### DETAILED DESCRIPTION

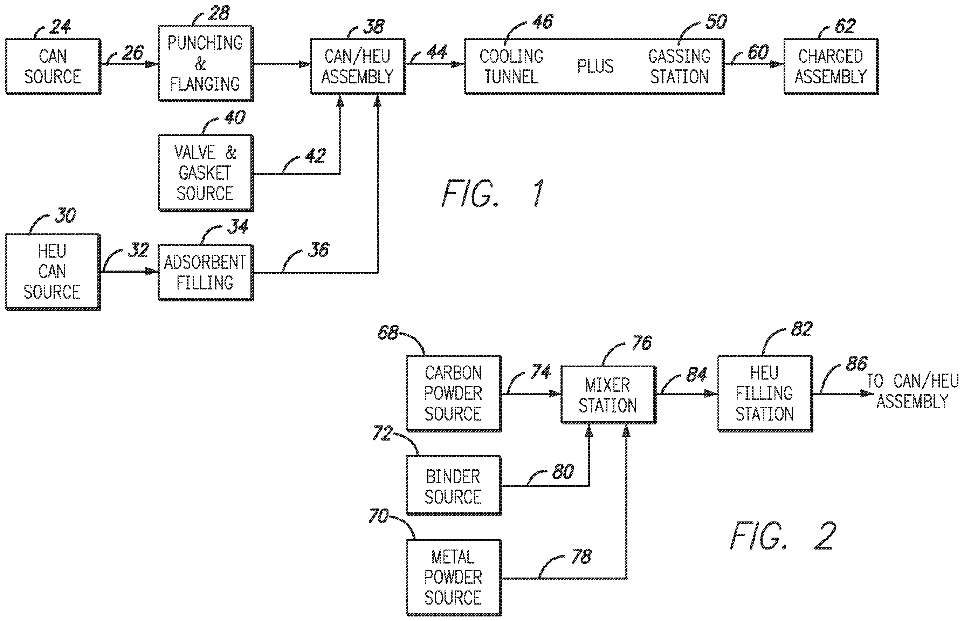

Referring now more particularly to FIG. 1, a schematic diagram has been provided of a manufacturing process line wherein the device is an endothermic device used to cool the contents of the container and more particularly where the container is a beverage can and an appropriate beverage is to be inserted into the can after the HEU has been fully charged. As is illustrated in FIG. 1, there is provided a can source 24 which will contain a supply of beverage cans which will be the traditional beverage can with the top end open since there will be no beverage therein and the top must remain open for filling the can with the beverage when the process of the present invention has been completed. The cans from the source 24 travel along an appropriate conveyor belt or the like 26 to a punching and flanging station 28. The punching and flanging station is utilized to provide an opening in the bottom of the can and to thereafter produce a flange around the opening provided in the bottom of the can which may be used during the can HEU assembly process. There is also provided an HEU can source 30 which contains a source of containers utilized as an HEU in the self-chilling beverage can industry. These cans have an open top and a closed bottom and are smaller than the beverage can from the source 24 so as to be receivable therein while leaving sufficient space to accommodate the beverage to be inserted later. The HEU cans will travel along an appropriate conveyor or the like 32 to an adsorbent filling station 34. The adsorbent filing station is utilized in accordance with one preferred embodiment of the present invention, where the endothermic reaction is provided by the utilization of an adsorbent material which is placed within the HEU can which, as will be described more fully below, later is caused to adsorb carbon dioxide which is retained and then upon release and desorbtion provides the desired cooling function. In accordance with a preferred embodiment of the present invention, the adsorbent utilized will be activated carbon particles combined with graphite and a binder which has been compacted. The open end of the HEU can may be necked inwardly to mate with the punched and flanged open end of the beverage can subsequent to the HEU can being filled with the adsorbent material.

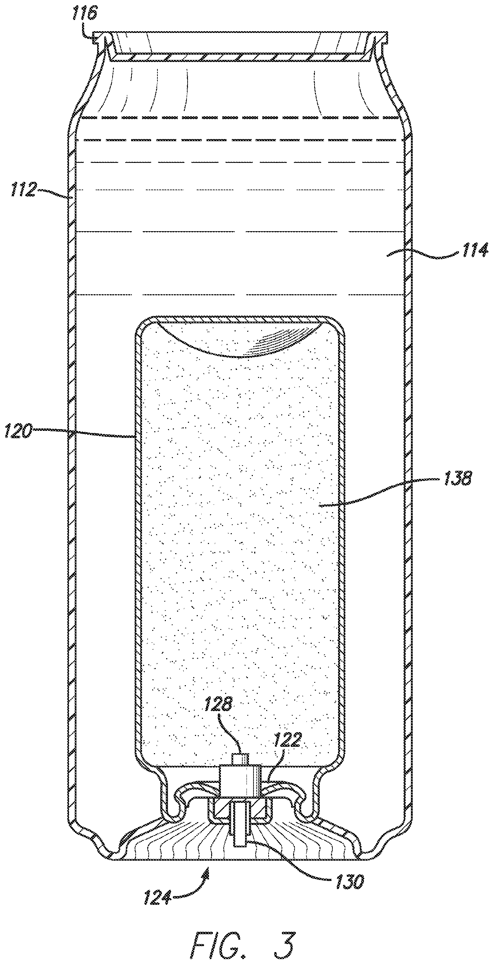

In any event, after the HEU can has been appropriately filled with the adsorbent material, it is then transported by the conveyor 36 to the can/HEU assembly station 38. Also transported to the assembly station 38 will be an appropriate valve and a gasket which is utilized in the assembly process. The valve and gasket are provided from a source 40 thereof. The valve and gasket are transported by an appropriate conveyor or the like 42 to the can/HEU assembly station 38. In assembly of the HEU and affixing it to the beverage can an appropriate gasket formed of elastomeric material is placed over the open end of the HEU which contains the adsorbent material therein. An inspection is performed to guarantee that the gasket is in fact seated properly upon the open end of the HEU. Subsequent thereto, the HEU open end having the gasket thereon is mated with the flange which surrounds the opening punched into the closed end of the can at the punching and flanging station 28. The valve and valve cup is then inserted into the opening provided in the bottom of the can and simultaneously into the opening in the HEU can and by way of a crimping process the valve HEU and beverage can are permanently secured together in a fashion so that an appropriate seal is formed between the HEU, the valve cup and the can to prevent any leakage of the beverage which is later to be placed into the beverage can. (The assembled can and HEU are illustrated in FIG. 3 which will be described in more detail below.)

Subsequent to the assembly of the beverage can and the HEU, this assembly is transported by way of the conveyor belt or the like 44 to a cooling tunnel 46 plus gassing station 50. As carbon dioxide is forced under pressure into the interior of the HEU can for adsorption an exothermic reaction occurs generating a substantial amount of heat which will radiate from the HEU. As the heat is generated from the carbon dioxide adsorption process, the carbon naturally will heat up and as it heats up the amount of carbon dioxide which it can adsorb decreases. At the gassing station 50, which is an integral part of the cooling tunnel, the valve is depressed and carbon dioxide is inserted into the HEU until a predetermined pressure of approximately 25 bars is reached. The cooling tunnel/gassing station will be filled with a cryogenic gas such as liquid nitrogen or the like to maintain the cooling tunnel/gassing station at a relatively low temperature, for example, on the order of 5° C. The source of carbon dioxide under pressure will remain affixed to the HEU while the cooling tunnel/gassing station is held at the low temperature for a period of time to allow the twenty-five bar pressure in the HEU to be reached and maintained. The predetermined amount of time to allow the desired amount of carbon dioxide to be adsorbed by the compacted adsorbent will be approximately 20 to 30 minutes of time. Once the desired amount of carbon dioxide has been adsorbed onto the compacted adsorbent, then the charged assembly 62 is transported by conveyor or other apparatus 60 to a desired position for filling with the desired food or beverage.

By reference to FIG. 2, there is illustrated in more detail the adsorbent filling operation wherein the carbon powder is applied to the HEU can. As is shown in FIG. 2, there is provided a source of carbon powder 68, a source of metal powder 70 and a source of binder 72. The carbon powder is transported by way of an appropriate conveyance means such as a chute, chute belt, screw, plunger or other mechanism 74 to a mixer station 76. The metal powder is also transported by a conveyance means 78 such as a belt, chute, screw or plunger to the mixer station 76 and the binder is likewise transported by a similar appropriate conveyance mechanism 80 to the mixer station 76. At the mixer station 76, the carbon powder and metal powder are intermixed with an appropriate binder to provide a desired mixture in a form which can be utilized to fill the HEU can. The utilization of the metal powder is to provide an appropriate mix of metallic particles with the activated carbon particles to provide a better heat transfer through the carbon particles, so that the heat of the beverage can be removed and exhausted with the carbon dioxide gas in a shorter period of time through the valve. Although various metallic powder may work well, it has been found that graphite powder is preferred. Without some type of heat transfer mechanism disposed within the carbon particles, it has been found that the heat is not easily transferred through carbon which is traditionally a relatively good insulator. Various types of heat sinks have been utilized but it has been found that an appropriate mixture of the metal powder with the carbon provides an excellent vehicle to transfer the heat from the beverage through the carbon and to the atmosphere. It has been found that the metal powder and the carbon can be combined without a binder and inserted into the HEU can and appropriately compacted with excellent results in cooling the beverage. However, in a preferred embodiment, a binder such as polytetrafluroethylene is included with the carbon and graphite. One embodiment of an appropriate composition is disclosed in U.S. Patent 7,185,511 which is incorporated herein by this reference.

Referring now more particularly to Figure 3, there is illustrated the can assembled with the HEU containing the compacted adsorbent. As is therein illustrated, the can 112 has an interior open space 114 into which the desired food or beverage will be deposited. The can 112 is open as shown at 116 for processing as described above in conjunction with Figures 1 and 2. The HEU can 120 contains the compacted adsorbent 138. The HEU can 120 is attached to the bottom of the can 112 through utilization of appropriate crimping as is well known in the art. A valve 124 is supported on a valve cup 122 which is secured to the top of the HEU can 120 as above described in conjunction with Figure 1. The valve 124 extends inwardly into the compacted adsorbent 138 as shown at 128. When the adsorbent is charged with the carbon dioxide under pressure, the gassing head is attached to the valve 124 and the valve is opened by depressing the plunger 130 to permit the carbon dioxide under pressure to enter the HEU can 120 and be adsorbed by the adsorbent 138.

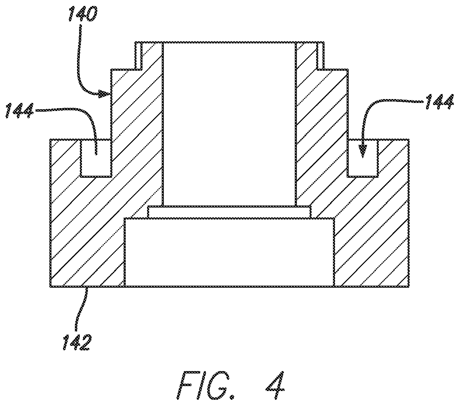

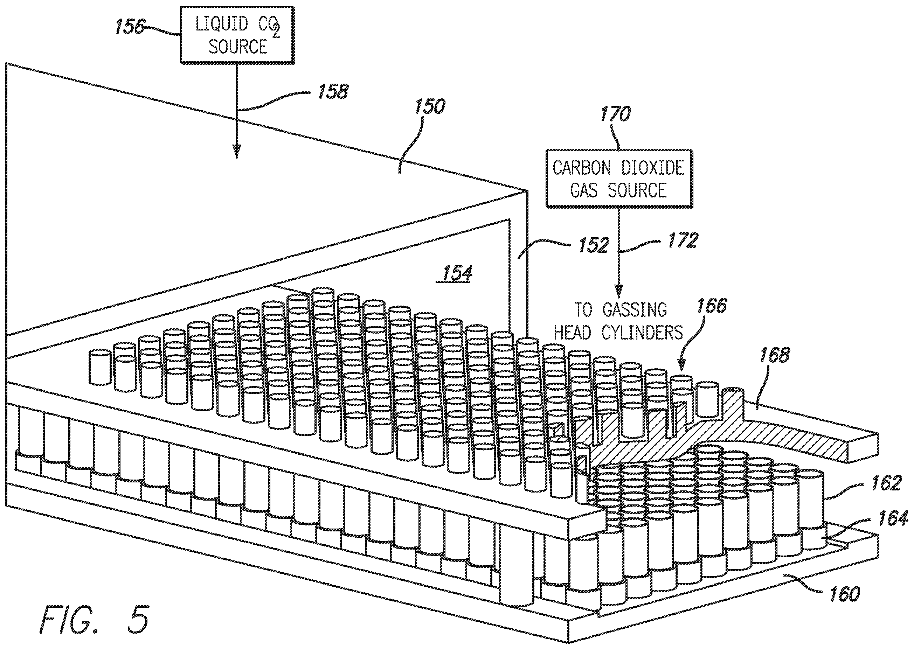

Figure 4 illustrates a puck which is utilized in the cooling tunnel/gassing station 46/50 as will be described more fully in conjunction with Figure 5 herein below. The puck 140 is preferably constructed of a plastic material but may be constructed of metal or other materials as may be desired. The puck 140 includes a base 142 which defines a groove 144 within which the open end 116 of the can 112 is received. The base 142 of the puck may then be placed upon a conveyor bed or belt for movement from one station to another during the various processing steps and specifically when the can HEU assembly is moved as indicated at Figure 1 into the cooling tunnel/gassing station.

Referring now more particularly to Figure 5, there is schematically illustrated, partly in cross section, an apparatus which will function as the cooling tunnel/gassing station as above described in conjunction with Figure 1. The apparatus as shown in Figure 5 includes an enclosed area such as a tunnel 150 which is approximately three meters by two meters and includes a housing 152 which defines an internal portion 154 within which the HEU/can are positioned to receive the carbon dioxide gas under pressure. The interior of the tunnel 150 is maintained at approximately 5° C. by injecting a gas such as liquid carbon dioxide (CO₂) from a source 156 thereof into the interior 154 of the tunnel as illustrated by the conduit 158. A flow of the liquid CO₂ into the interior 154 of the tunnel 150 will allow the HEU/can as shown in Figure 3 to be initially cooled.

The apparatus as shown in Figure 5 includes a conveyor bed 160 upon which the HEU/can assemblies as illustrated at 162 can be positioned. As is shown, each of the HEU/can assemblies is positioned within a puck 164 of the type as shown in Figure 4. As was above described and is now illustrated in Figure 5, the assembly as illustrated in Figure 3 is positioned on the puck by turning the assembly such that the open end 116 of the can 112 is positioned within the groove 144 of the puck. In this position, the HEU/can assembly is disposed such that the valve 124 extends upwardly as viewed in Figure 5. A plurality of gassing head cylinders as shown at 166 are supported upon an index conveyor frame 168. A source of carbon dioxide gas under pressure as shown at 170 is connected to each of the gassing head cylinders 166 as indicated by the conduit 172.

The apparatus as shown in Figure 5 may be operated in two different manners. In the first manner, the cans with the HEU's assembled therein as shown at 162 and positioned within the pucks 164 are positioned so that there are ten such HEU/can assemblies distributed across the conveyor bed 160 and there are twenty of these assemblies distributed longitudinally along the conveyor bed 160. Thus the full index of two hundred HEU/can assemblies are loaded onto the conveyor bed and positioned internally of the tunnel 150. As is viewed in Figure 5, the conveyor bed would be pushed into the interior 154 and brought to rest there. When the cans are thus positioned within the interior 154 of the tunnel 150, each of the gassing heads 166 would be moved downwardly onto each of the assemblies independently depressing the plunger 130 and thus allowing the carbon dioxide gas under pressure from the source 170 to enter the HEU to start the adsorbtion of the carbon dioxide onto the compacted adsorbent positioned therein. This application of the carbon dioxide gas under pressure would be allowed to continue for a period of approximately twenty to thirty minutes at a gas pressure between 10 to 15 bars for the entire period of time. During this time, the temperature of the cans would increase as a result of the exothermic activity created by the carbon dioxide gas under pressure entering the HEU 120. After the full time out of the twenty to thirty minutes during which period of time the heat being generated would be mitigated by the continuous flow of the liquid CO₂ blast from the source 156 thereof, thus allowing the CO₂ to be adsorbed in the desired amount by the adsorbent 138 in the HEU. After such has occurred all of the gassing head cylinders 166 would be disengaged from the HEU/can assemblies 162 and the conveyor bed would then move all of the two hundred cans out of the tunnel to then be transported to the desired position for further processing as above described. After such occurs, then the process as just described would be repeated by indexing another two hundred cans onto the conveyor bed and repeating the process. As will be understood by those skilled in the art, only one gassing cycle is thus needed for each group of two hundred cans and approximately two hundred cans could be processed over each twenty to thirty minute period of time.

As an alternative arrangement, the apparatus as shown in Figure 5 would function such that the conveyor bed 160 would be continuously moved through the tunnel 150 while the liquid CO₂ gas from the source 156 is processed through the interior 154 of the tunnel to maintain it at the 5° C. As the HEU/can assembly within the puck as illustrated is thus moved through the conveyor, gassing heads would be moved into engagement with a row of the HEU/can assemblies, depressing the plunger 130 and allowing the carbon dioxide gas from the source 170 to enter the can. The cans with the gassing heads continuously in contact therewith and permitting the carbon dioxide gas under pressure to be adsorbed by the adsorbent 138 would move through the tunnel over a period of approximately twenty to thirty minutes after which the gassing head cylinders would be removed from the row of the HEU/can assemblies. Since this is occurring on a continuous basis, the heat generated would be much less than that involved when the full two hundred cans are gassed simultaneously. As a result, the process as just described would run much more efficiently and one can achieve the gassing of approximately ten cans per minute.

Although the cooling tunnel plus gassing station has been illustrated in Fig. 1 as part of the inline manufacturing process, it should be understood that such is not required. The cooling tunnel plus gassing station as illustrated in Fig. 5 may be a stand alone unit. In this case, the can/HEU assembly with the compacted adsorbent therein would be manufactured separately wherever desired and then transported to the cooling tunnel plus gassing station to have the CO₂ under pressure inserted into the HEU. One advantage of such is to be able to ship the assembled can/HEU without the CO₂ thus making the units non-hazardous during transport.

There has thus been disclosed a method and apparatus for achieving the assembly of an HEU containing an adsorbent with a can and the charging of the HEU with carbon dioxide gas while mitigating the exothermic reaction created as a result thereof.

## Claims

1. Apparatus for charging a heat exchange unit (120) secured within a can (112) for receiving a food or beverage to be cooled, said heat exchange unit (120) having compacted adsorbent material (138) therein, with a gas under pressure including a cooling tunnel (150), a source of refrigerant (156) under pressure connected to said cooling tunnel (150) to maintain the temperature inside said cooling tunnel (150) at approximately five degrees Celsius, a conveyor bed (160) for receiving said can (112) having said heat exchange unit (120) therein positioned within said cooling tunnel (150), a gassing head (166) positioned to engage said heat exchange unit (120) to inject a gas under pressure into said heat exchange unit (120) to be adsorbed by said compacted adsorbent material (138), a source of gas (170) under pressure connected to said gassing head (166), said gassing head (166) being connected to said heat exchange unit (120) and injecting gas under pressure therein, **characterized in that**:
said conveyor bed (160) is adapted to receive a plurality of cans (112) having said heat exchange units (120) therein;
said gassing heads (166) are connected to at least a portion of said plurality of said heat exchange units (120) to inject gas under pressure simultaneously into said at least a portion of said plurality of said heat exchange units (120), and
said refrigerant under pressure is adapted to continuously flow through said cooling tunnel (150) simultaneously with gas under pressure being injected into said heat exchange units (120) for a predetermined period of time sufficient to fully charge said at least a portion of said plurality of said heat exchange units (120) with adsorbed gas under pressure.

2. Apparatus as defined in Claim 1 wherein said source of refrigerant is liquid carbon dioxide.

3. Apparatus as defined in Claim 2 wherein said gas under pressure is carbon dioxide.

4. Apparatus as defined in Claim 3 wherein there is a gassing head (166) for each can (112) having a heat exchange unit (120) therein positioned on said conveyor bed (160) and said conveyor bed (160) with said gassing heads (166) connected to said heat exchange units (120) is maintained stationary within said cooling tunnel (150) for said predetermined time.

5. Apparatus as defined in Claim 3 wherein said conveyor bed (160) is moved through said cooling tunnel (150) and said gassing heads (166) are connected only to said at least a portion of said heat exchange units (120) and injecting said carbon dioxide gas while being moved for said predetermined period of time.

6. A method of charging adsorbent material (138) contained within a heat exchange unit (120) including providing a plurality of containers (112) for receiving a food or beverage to be cooled, providing a plurality of heat exchange units (120) containing a compacted adsorbent material (138) therein, assembling a heat exchange unit (120) with each container (112), **characterized by** inserting the plurality of assembled containers (112) into an enclosed area (150), attaching a source (170) of carbon dioxide (CO₂) gas under pressure to each heat exchange unit (120) and continuously injecting CO₂ gas under pressure into said heat exchange units (120) for a predetermined period of time for adsorption thereof by the adsorbent material (138), continuously flowing a refrigerant under pressure through said enclosed area (150) simultaneously with injecting the CO₂ gas into said heat exchange units (120) to remove heat generated by the exothermic reaction of adsorption of the CO₂ gas for a predetermined period of time to permit complete adsorption of the CO₂ gas by said adsorbent material (138), and removing said source (170) of CO₂ gas from each heat exchange unit (120).

7. A method as defined in Claim 6 herein the pressure of said CO₂ gas is approximately 15 bars.

8. A method as defined in Claim 6 wherein said predetermined time is between 20 and 30 minutes.

9. A method as defined in Claim 6 wherein the refrigerant is liquid CO₂ and said enclosed area (150) is maintained at approximately five degrees Celsius.

## Patentansprüche

1. Vorrichtung zum Laden einer Wärmeaustauscheinheit (120), die in einer Dose (112) zur Aufnahme eines zu kühlenden Nahrungsmittels oder Getränks befestigt ist, wobei die Wärmeaustauscheinheit (120) darin verdichtetes Adsorptionsmaterial (138) mit einem unter Druck stehendem Gas einschließlich eines Kühltunnels (150) aufweist, wobei eine unter Druck stehende Kühlmittelquelle (156) mit dem Kühltunnel (150) verbunden ist, um die Temperatur innerhalb des Kühltunnels (150) bei ungefähr fünf Grad Celsius zu halten, ein Förderbett (160) zur Aufnahme der Dose (112), wobei die Wärmeaustauscheinheit (120) darin innerhalb des Kühltunnels (150) positioniert ist, wobei ein Begasungskopf (166) positioniert ist, um in die Wärmeaustauscheinheit (120) einzugreifen, um ein unter Druck stehendes Gas in die Wärmeaustauscheinheit (120) einzuspeisen, um von dem verdichteten Adsorptionsmaterial (138) adsorbiert zu werden, wobei eine unter Druck stehende Gasquelle (170) mit dem Begasungskopf (166) verbunden ist, wobei der Begasungskopf (166) mit der Wärmetauscheinheit (120) verbunden ist und unter Druck stehendes Gas darin einspeist, **dadurch gekennzeichnet, dass**:
das Förderbett (160) so ausgelegt ist, dass es eine Vielzahl von Dosen (112) mit darin befindlichen Wärmeaustauscheinheiten (120) aufnehmen kann;
die Begasungsköpfe (166) mit mindestens einem Teil der Mehrzahl der Wärmeaustauscheinheiten (120) verbunden sind, um gleichzeitig unter Druck stehendes Gas in den mindestens einen Teil der Vielzahl der Wärmeaustauscheinheiten (120) einzuspeisen, und
das unter Druck stehende Kältemittel dazu ausgelegt ist, gleichzeitig mit unter Druck stehendem Gas kontinuierlich durch den Kühltunnel (150) zu strömen, das in die Wärmeaustauscheinheiten (120) für eine vorbestimmte Zeitdauer eingespeist wird, die ausreicht, um den wenigstens einen Teil der Vielzahl von Wärmeaustauscheinheiten (120) mit unter Druck stehendem adsorbiertem Gas vollständig zu laden.

2. Vorrichtung nach Anspruch 1, wobei die Kühlmittelquelle flüssiges Kohlendioxid ist.

3. Vorrichtung nach Anspruch 2, wobei das unter Druck stehende Gas Kohlendioxid ist.

4. Vorrichtung nach Anspruch 3, wobei für jede Dose (112) ein Begasungskopf (166) vorgesehen ist, der eine darin angeordnete Wärmeaustauscheinheit (120) auf dem Förderbett (160) aufweist und wobei das Förderbett (160) mit den Begasungsköpfen (166), die mit den Wärmeaustauscheinheiten (120) verbunden sind, innerhalb des Kühltunnels (150) für die vorbestimmte Zeit stationär gehalten wird.

5. Vorrichtung nach Anspruch 3, wobei das Förderbett (160) durch den Kühltunnel (150) bewegt wird und die Begasungsköpfe (166) nur mit dem mindestens einen Teil der Wärmetauscheinheiten (120) verbunden sind und das Kohlendioxidgas einspeisen, während sie für die vorbestimmte Zeitdauer bewegt werden.

6. Verfahren zum Laden von Adsorptionsmaterial (138), das in einer Wärmeaustauscheinheit (120) enthalten ist, einschließlich des Bereitstellens einer Vielzahl von Behältern (112) zum Aufnehmen eines zu kühlenden Nahrungsmittels oder Getränks, des Bereitstellens einer Vielzahl von Wärmeaustauscheinheiten (120), die ein verdichtetes Adsorptionsmaterial (138) darin enthalten, des Zusammenbaus einer Wärmeaustauscheinheit (120) mit jedem Behälter (112), **gekennzeichnet durch**
Einführen der Vielzahl von zusammengebauten Behältern (112) in einen geschlossenen Bereich (150),
Befestigen einer Quelle (170) von unter Druck stehendem Kohlendioxidgas (CO₂) an jeder Wärmeaustauscheinheit (120) und kontinuierliches Einspeisen von unter Druck stehendem CO₂-Gas in die Wärmeaustauscheinheiten (120) für eine vorbestimmte Zeitdauer für deren Adsorption durch das Adsorptionsmaterial (138),
kontinuierliches Strömenlassen eines unter Druck stehenden Kältemittels durch den eingeschlossenen Bereich (150) gleichzeitig mit dem Einspeisen des CO₂-Gases in die Wärmetauscheinheiten (120), um die durch die exotherme Reaktion der Adsorption des CO₂-Gases für eine vorbestimmte Zeitdauer erzeugte Wärme abzuführen, um eine vollständige Adsorption des CO₂-Gases durch das adsorbierende Material (138) zu erlauben, und
Entfernen der Quelle (170) von CO₂-Gas aus jeder Wärmeaustauscheinheit (120).

7. Verfahren nach Anspruch 6, wobei der Druck des CO₂-Gases ungefähr 15 bar beträgt.

8. Verfahren nach Anspruch 6, wobei die vorbestimmte Zeit zwischen 20 und 30 Minuten beträgt.

9. Verfahren nach Anspruch 6, wobei das Kühlmittel flüssiges CO₂ ist und der geschlossene Bereich (150) bei ungefähr fünf Grad Celsius gehalten wird.

## Revendications

1. Appareil pour charger une unité d'échange de chaleur (120) fixée dans une boîte (112) afin de recevoir un aliment ou une boisson à refroidir, ladite unité d'échange de chaleur (120) ayant un matériau adsorbant compacté (138) en son sein, avec un gaz sous pression incluant un tunnel de refroidissement (150), une source de réfrigérant (156) sous pression reliée audit tunnel de refroidissement (150) pour maintenir la température à l'intérieur dudit tunnel de refroidissement (150) à environ cinq degrés Celsius, un lit de transport (160) pour recevoir ladite boîte (112) ayant ladite unité d'échange de chaleur (120) positionnée en son sein dans ledit tunnel de refroidissement (150), une tête de gazage (166) positionnée pour solidariser ladite unité d'échange de chaleur (120) afin d'injecter un gaz sous pression dans ladite unité d'échange de chaleur (120) à adsorber par ledit matériau adsorbant compacté (138), une source de gaz (170) sous pression reliée à ladite tête de gazage (166), ladite tête de gazage (166) étant reliée à ladite unité d'échange de chaleur (120) et injectant du gaz sous pression en son sein, **caractérisé en ce que** :
ledit lit de transport (160) est adapté pour recevoir une pluralité de boîtes (112) ayant lesdites unités d'échange de chaleur (120) en leur sein ;
lesdites têtes de gazage (166) sont reliées à au moins une portion de ladite pluralité desdites unités d'échange de chaleur (120) pour injecter du gaz sous pression simultanément dans ladite au moins une portion de ladite pluralité desdites unités d'échange de chaleur (120) et
ledit réfrigérant sous pression est adapté pour s'écouler en continu à travers ledit tunnel de refroidissement (150) simultanément à du gaz sous pression injecté dans lesdites unités d'échange de chaleur (120) pendant une durée prédéfinie suffisante pour charger complètement ladite au moins une portion de ladite pluralité desdites unités d'échange de chaleur (120) avec du gaz sous pression adsorbé.

2. Appareil selon la revendication 1, dans lequel ladite source de réfrigérant est du dioxyde de carbone liquide.

3. Appareil selon la revendication 2, dans lequel ledit gaz sous pression est du dioxyde de carbone.

4. Appareil selon la revendication 3, dans lequel se trouve une tête de gazage (166) pour chaque boîte (112) comportant une unité d'échange de chaleur (120) positionnée en son sein sur ledit lit de transport (160) et ledit lit de transport (160) avec lesdites têtes de gazage (166) reliées auxdites unités d'échange de chaleur (120) est maintenu immobile au sein dudit tunnel de refroidissement (150) pendant ladite durée prédéfinie.

5. Appareil selon la revendication 3, dans lequel ledit lit de transport (160) est déplacé à travers ledit tunnel de refroidissement (150) et lesdites têtes de gazage (166) sont reliées uniquement à ladite au moins une portion desdites unités d'échange de chaleur (120) et injectent ledit gaz de dioxyde de carbone, tout en étant déplacé pendant ladite durée prédéfinie.

6. Procédé de chargement d'un matériau adsorbant (138) contenu dans une unité d'échange de chaleur (120) comprenant la fourniture d'une pluralité de récipients (112) pour recevoir un aliment ou une boisson à refroidir, la fourniture d'une pluralité d'unités d'échange de chaleur (120) contenant un matériau adsorbant compacté (138) en son sein, l'assemblage d'une unité d'échange de chaleur (120) avec chaque récipient (112), **caractérisé par**
l'insertion de la pluralité de récipients assemblés (112) dans une zone fermée (150), l'attache d'une source (170) de gaz carbonique (CO₂) sous pression à chaque unité d'échange de chaleur (120) et l'injection en continu de gaz CO₂ sous pression dans lesdites unités d'échange de chaleur (120) pendant une durée prédéfinie pour leur adsorption par le matériau adsorbant (138),
la mise en circulation en continu d'un réfrigérant sous pression à travers ladite zone fermée (150) simultanément à l'injection du gaz CO₂ dans lesdites unités d'échange de chaleur (120) pour éliminer la chaleur produite par la réaction exothermique d'adsorption du gaz CO₂ pour une durée prédéfinie afin de permettre l'adsorption complète du gaz CO₂ par ledit matériau adsorbant (138) et
le retrait de ladite source (170) de gaz CO₂ de chaque unité d'échange de chaleur (120).

7. Procédé selon la revendication 6, dans lequel la pression dudit gaz CO₂ est d'environ 15 bars.

8. Procédé selon la revendication 6, dans lequel ladite durée prédéfinie est comprise entre 20 et 30 minutes.

9. Procédé selon la revendication 6, dans lequel le réfrigérant est du CO₂ liquide et ladite zone fermée (150) est maintenue à environ cinq degrés Celsius.
